# FASCICULE DE BREVET EUROPEEN

(11) **EP 3 446 863 B1**
(45) Date de publication et mention de la délivrance du brevet: **04.12.2019**
(21) Numéro de dépôt: 18195582.4
(22) Date de dépôt: 29.10.2012
(51) Int. Cl.: B29C 70/08, B29C 70/88, B60K 15/03, B64C 3/34, B29C 65/48, B29C 65/60, B29C 65/00, B29K 71/00, B29K 63/00

(54) **PROCÉDÉ POUR ÉTANCHER UN RÉSERVOIR DE CARBURANT**
VERFAHREN ZUM ABDICHTEN EINES KRAFTSTOFFTANKS
METHOD FOR SEALING A FUEL TANK

(30) Priorité: 28.10.2011 FR 1159817
(43) Date de publication de la demande: 27.02.2019
(62) Demande divisionnaire de: 12779065.7
(73) Titulaire: Daher Aerospace, 41400 Saint Julien De Chedon (FR)
(72) Inventeur: HOTTIN, Mathieu, 44860 Saint Aignan de Grandlieu (FR); BAILLY, Dominique, 44118 La Chevrolière (FR)
(74) Mandataire: Ipside

(56) Documents cités:
- WO-A1-2007/045466
- WO-A2-2012/007116
- GB-A- 559 525

## Description

L'invention concerne un procédé pour étancher un réservoir de carburant. L'invention est plus particulièrement adaptée aux réservoirs de carburant d'aéronefs, formés par un assemblage d'éléments constitués d'un matériau composite à renfort fibreux.

Le réservoir de carburant d'un aéronef est généralement placé dans un volume vide d'une structure en caisson, notamment dans la structure des voilures. Pour pouvoir contenir le carburant, ledit volume doit être étanche, et d'autre part, les matériaux constituant ladite structure caisson doivent être protégés des éventuelles dégradations que pourrait engendrer leur contact avec le carburant. Cette dernière caractéristique est particulièrement pertinente dans le cas où les matériaux constituant la structure caisson sont des matériaux composites à matrice organique, vis-à-vis desquels les hydrocarbures du carburant agissent comme des solvants.

Selon l'art antérieur cette protection peut être obtenue par l'insertion d'une vessie dans le volume vide de la structure caisson utilisée comme réservoir. Cette solution est défavorable pour les applications aéronautiques car la vessie constitue une masse supplémentaire. De plus, la forme interne du volume vide, dictée essentiellement par des considérations structurales, peut être complexe et, tant l'adaptation de la forme de la vessie à ce volume, que l'introduction de ladite vessie dans ce volume sont délicates.

Une autre solution de l'art antérieur consiste à peindre les pièces structurales délimitant le volume vide de la structure caisson avec un primaire spécifique, résistant aux hydrocarbures. Cette solution technique impose une opération de peinture dans la gamme de fabrication et sa qualité de réalisation est dépendante du savoir-faire de l'opérateur.

Finalement, selon une troisième solution de l'art antérieur, la protection est réalisée en appliquant à l'intérieur du volume vide de la structure caisson assemblée, un mastic liquide à base de polythioéther. Cette opération, généralement réalisée au pinceau, est couramment désignée sous le terme de barattage, et s'avère être de mise en œuvre particulièrement pénible.

Le document WO 2007 045466 décrit un réservoir de carburant en matériau composite à matrice organique, ainsi que des procédés de fabrication d'un tel réservoir. Le réservoir de carburant décrit dans ce document de l'art antérieur est destiné à une motocyclette ou à une automobile et constitue une réservoir de faible volume. Ce document divulgue deux mode de réalisation d'un tel réservoir, le premier constant à mouler une enveloppe constituée d'un matériau thermoplastique sur laquelle des plis renforcés sont ensuite drappés. Le second mode consiste à d'abord réaliser une enveloppe constituée d'un matériau composite stratifié puis à recouvrir, après cuisson, l'intérieur de cette enveloppe d'un film thermoplastique par soufflage ou rotomoulage de ce film à l'intérieur du volume du réservoir ainsi constitué. Ces modes de réalisation sont totalement inadapté à la réalisation d'un réservoir destiné à un aéronef. Le document GB559,525 décrit un procédé pour la fabrication d'une structure en caisson pour un aéronef, ladite structure comportant un volume apte à contenir du carburant, par l'assemblage d'une pluralité de pièces composites à renfort fibreux, caractérisé en ce qu'il comprend les étapes consistant à réaliser une pluralité de pièces élémentaires stratifiées composites à renfort fibreux dans une matrice organique, chaque pièce comprenant une face exposée aux hydrocarbure dans ladite structure caisson, et une zone formant interface d'assemblage pour l'assemblage de ladite pièce dans la structure caisson, et assembler lesdites pièces de sorte à constituer la structure. Ce document ne décrit pas l'application d'un film de protection.

L'invention vise à résoudre les inconvénients de l'art antérieur et concerne à cette fin un procédé pour la réalisation d'un élément de structure comprenant un panneau en matériau composite à renfort fibreux dans une matrice organique obtenu par drapage et cuisson, lequel panneau comprend une face susceptible d'être exposée au contact avec des hydrocarbures, ledit procédé comportant les étapes consistant à :
a. draper les plis de fibres préimprégnées d'une résine ayant une première température de cuisson, T1, de sorte à obtenir la stratification visée ;
b. déposer sur la face exposée aux hydrocarbures, un pli constitué d'un film mince d'un polymère résistant aux hydrocarbures et à la température de cuisson T1, dit film de protection ;
c. réaliser la cuisson sous pression à la température T1 de l'ensemble de la stratification.

Ainsi, la protection de la surface exposée est obtenue lors de la fabrication des éléments constituant la structure caisson au stade de la pièce élémentaire et l'application de cette protection ne modifie par le temps d'assemblage de la structure. Lors de l'application de la protection, les pièces sont parfaitement accessibles et la protection est assurée uniformément sur toute la surface recouverte par le film. La co-cuisson du film et de la pièce assure la cohésion du film sur la surface protégée. Le film étant mince, la masse ajoutée est faible.

L'invention peut être mise en œuvre selon les modes de réalisation avantageux exposés ci-après, lesquels peuvent être considérés individuellement ou selon toute combinaison techniquement opérante.

Selon un mode de réalisation avantageux, la matrice est constituée d'une résine thermodurcissable époxyde et le film de protection est constitué d'un polymère de polyétheréthercétone (PEEK) d'une épaisseur comprise entre 0,015 mm et 0,035 mm.

Ainsi, les propriété du film PEEK n'étant pas affectées par la cuisson de la résine époxyde, ledit film étant par ailleurs parfaitement résistants aux hydrocarbures utilisés comme carburant d'aéronef, il n'ajoute qu'une masse de quelques dizaines de grammes par m² de surface sur laquelle il est appliqué.

Avantageusement, le film de protection déposé à l'étape b) du procédé objet de l'invention ne couvre pas la totalité de la face exposée aux hydrocarbures. Ainsi, le procédé objet de l'invention permet de conserver des zones non couvertes par le film de protection, notamment pour le collage ou l'assemblage avec d'autres pièces.

Selon ce mode de réalisation l'étape b) du procédé objet de l'invention comprend les opérations consistant à :
b.i. découper le film de protection au contour visé ;
b.ii. projeter l'emplacement des zones non couvertes par le film de protection ;
b.iii. déposer le film sur la stratification en dehors des zones ainsi délimitées.

Avantageusement une face du film de protection est traitée pour en améliorer la mouillabilité. Ainsi, l'adhésion du film à la résine, après cuisson de celle-ci est améliorée.

Avantageusement, le film de protection comprend une couche d'un adhésif sensible à la pression, dit PSA, sur l'une de ses faces. Ainsi, l'application du film sur la stratification est facilitée, particulièrement lorsque ladite stratification n'est pas pégueuse. PSA étant l'acronyme de l'expression en langue anglaise « *Pressure Sensitive Adhesive* ».

Selon un mode de réalisation particulier, le film de protection est déposé en plusieurs lés avec des recouvrements des bords desdits lés. Ainsi le procédé objet de l'invention est adapté à la couverture de pièces élémentaires de grande dimension tout en assurant l'étanchéité entre les lés de film de protection déposés.

Avantageusement le procédé objet de l'invention comprend entre les étapes b) et c) une étape consistant à :
d. compacter la stratification et le film sous sac à vide.

Ainsi la cohésion mécanique du film avec la stratification est assurée.

L'invention concerne également un procédé pour la fabrication d'une structure en caisson comportant un volume apte à contenir du carburant lequel procédé comprend les étapes consistant à :
i. obtenir une pluralité de pièces constituant la structure en caisson selon un mode de réalisation du procédé précédent ;
ii. assembler lesdites pièces de sorte à constituer la structure ;
iii. parfaire l'étanchéité de la structure ainsi constituée au niveau des interfaces d'assemblage.

Ainsi, les opérations pour la protection et l'étanchéité de la structure en caisson se limitent au traitement des interfaces d'assemblage.

Selon un mode de réalisation particulier, l'étape ii) du procédé est réalisée par rivetage.

Selon un mode de réalisation alternatif, l'étape ii) du procédé est réalisée par collage.

L'invention concerne également un aéronef comprenant une structure en caisson dont un volume vide est utilisé comme réservoir à carburant, ladite structure en caisson comportant un élément structural comprenant un panneau composite à renfort fibreux obtenu selon le procédé objet de l'invention. L'utilisation des matériaux composites pour la constitution de cette structure caisson associée au mode de protection de ces matériaux permet de réaliser un gain de masse en regard des solutions connues de l'art antérieur et de faciliter la fabrication d'une telle structure. Ainsi, l'aéronef objet de l'invention est avantageux tant en termes de coût de fabrication que de coût d'exploitation.

L'invention est exposée ci-après selon ses modes de réalisation préférés, nullement limitatifs, et en référence aux figures 1 à 4, dans les quelles :
- la figure 1 est une vue partielle en coupe et en éclaté d'un exemple de réalisation d'une structure en caisson selon l'invention ;
- la figure 2 représente selon la même vue que la figure 1, la même structure caisson après assemblage ;
- la figure 3 montre en perspective et en éclaté une des pièces élémentaires de la structure caisson des figures 1 et 2 au cours de la réalisation de ladite pièce élémentaire ;
- et la figure 4 est un organigramme montrant les étapes du procédé selon un exemple de réalisation de l'invention.

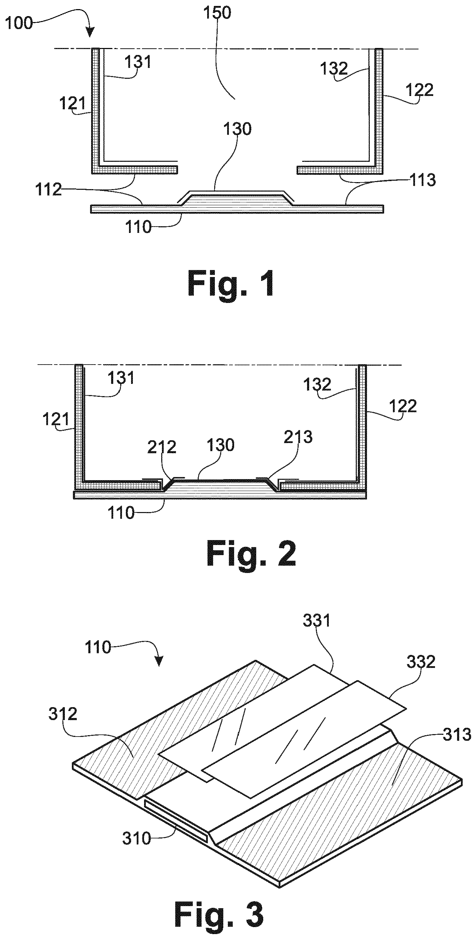

Figure 1, selon un exemple de réalisation, la structure en caisson (100) objet de l'invention est constituée d'une pluralité de pièces élémentaires (110, 121, 122) constituées d'un matériau composite à renfort fibreux. À titre d'exemple non limitatif, ledit matériau composite comprend des fibres de carbone dans une matrice en résine époxyde. Les pièces élémentaires sont assemblées le long d'interfaces d'assemblage (112, 113). Cet assemblage peut être réalisé par collage ou par co-cuisson. Alternativement ou conjointement, l'assemblage peut être réalisé par rivetage. Ces techniques d'assemblage sont connues de l'art antérieur et ne sont pas exposées plus avant. Le volume intérieur (150) de cette structure caisson est susceptible de contenir du carburant. Afin de protéger les pièces élémentaires (121, 122, 110) du contact avec ce carburant, les faces exposées de celles-ci sont couvertes par un film de protection (130, 131, 132) posé sur lesdites faces lors de la fabrication des pièces élémentaires (110, 121, 122). Selon un mode de réalisation préféré, ce film de protection est constitué de polyéthertéhercétone ou PEEK. De tels films sont, par exemple, commercialisés sous la marque APTIV® par la société VICTREX®.

Figure 2, après assemblage, les interstices subsistant entre les pièces élémentaires sont comblés par des cordons de mastic (212, 213) afin de parfaire l'étanchéité de l'ensemble. Le mastic utilisé est un mastic résistant aux hydrocarbures, par exemple un mastic à base de polythioéther distribué sous la dénomination PR par la société Le Joint Français®.

Figure 3, selon un exemple de réalisation d'une pièce élémentaire (110) de la structure caisson objet de l'invention, ladite pièce est réalisée par drapage de plis de fibres préimprégnées. Selon un mode de réalisation particulier, le drapage peut être partiellement réalisé autour d'un noyau (310) par exemple autour d'une plaque en nid d'abeille. Ce drapage peut être automatique ou manuel. Le film protecteur est posé sur la zone exposée au carburant de la préforme de la pièce (110), par exemple sous la forme d'une pluralité (331, 332) de lés de film PEEK. Chaque lé (331, 332) comprend une zone de recouvrement avec le lé qui lui est juxtaposé, de sorte que la jonction entre deux lés soit étanche. Les zones (312, 313) formant interface avec les autres pièces élémentaires pour l'assemblage de la structure en caisson, ne sont pas couvertes par le film de protection (331, 332). Le film de protection est ici représenté selon une découpe rectiligne. En pratique le contour du film peut être plus complexe de sorte à ménager des épargnes (331, 332) de forme également plus complexe. Dans ce cas, les lés (331, 332) de film de protection sont, préalablement à leur pose, découpés au contour désiré. L'opération de pose des films de protection est réalisée manuellement. Elle est grandement facilitée par le fait que la pièce élémentaire se trouve à plat, accessible de tous les côtés durant cette opération. Le film de protection peut être également découpé en plusieurs lés de sorte à faciliter la manipulation de ceux-ci. Pour assister l'opérateur durant la pose dudit film de protection, le contour du lé à déposer sur la préforme peut être projeté par laser sur ladite préforme selon une méthode connue de l'art antérieur pour le drapage manuel. Selon la dimension de la pièce élémentaire, les lés de film de protection sont stabilisés sur la structure lors de la pose, grâce à la pégosité des plis préalablement drapés. Lorsque les dimensions de la pièce sont importantes les lés de film de protection peuvent être appliqués sur la préforme par un compactage sous sac à vide juste avant la cuisson de ladite préforme. Le film protecteur est avantageusement traité sur sa face en contact avec la résine constituant la matrice de la pièce, par une méthode visant à en accroître la mouillabilité de sorte à améliorer l'adhésion du film à la pièce sur toute sa surface. Un tel traitement consiste à augmenter l'énergie libre de surface du film de sorte que celle-ci soit supérieure à celle de la résine liquide et que ladite résine mouille correctement la surface du film au cours de l'opération de cuisson. Dans le cas d'un film PEEK ce traitement, réalisé par plasma, par UV ou par ozone, sans que cette liste ne soit exhaustive, permet de faire croître l'énergie libre superficielle de la face ainsi traitée jusqu'à une valeur comprise entre 55 et 60 Joules.m⁻¹. Dans le cas où plusieurs lés sont posés avec recouvrement des bords des lés juxtaposés, le traitement d'amélioration de la mouillabilité est réalisé sur les deux faces du film de protection.

Dans le cas où les plis de fibres drapés sont faiblement préimprégnés, par exemple avec un taux de résine inférieur à 5 %, courament désignées par « fibres sèches », les lés de film de protection peuvent être enduits sur toute ou partie de leur face en contact avec la stratification, par un adhésif sensible à la pression, ou PSA, par exemple avec un adhésif à base de silicones, ceci afin de faciliter leur pose. Ainsi le procédé objet de l'invention est également adapté à la réalisation de pièces à partir de fibres sèches, notamment par injection ou infusion de résine.

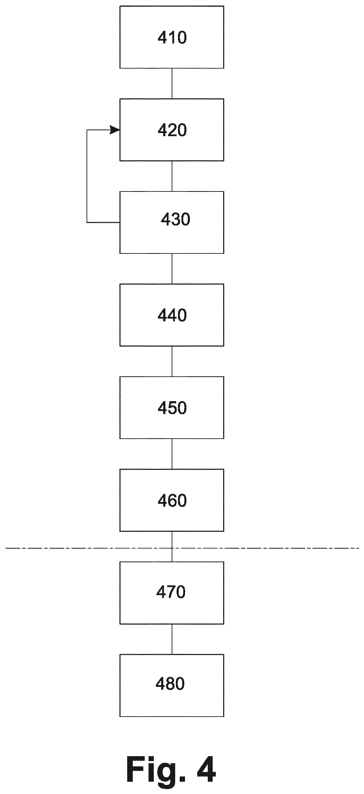

Figure 4, le procédé objet de l'invention comprend une première série d'étapes correspondant à la réalisation des pièces élémentaires. Ainsi, pour chaque pièce élémentaire, une première étape (410) de drapage permet de constituer la préforme de la pièce. Au cours d'une étape de préparation (420) le film de protection est découpé au contour visé pour recouvrir tout ou partie de la surface de la pièce exposée aux hydrocarbures. Le lé de film ainsi découpé est déposé sur la préforme au cours d'une étape (430) de dépose dudit lé. Ce lé est maintenu sur la préforme par la pégosité des plis préimprégnés précédemment drapés, ou par la présence d'un adhésif de type PSA sur toute ou partie de la surface du lé en contact avec la préforme. Les étapes précédentes (420, 430) sont répétées pour différents lés jusqu'à recouvrir toute la surface exposée aux hydrocarbures de la pièce . Lorsque la dite surface exposée est entièrement couverte, la préforme est ensachée, au cours d'une étape (440) d'ensachage, et l'ensemble est compacté, au cours d'une étape de compactage (450) en tirant au vide l'ensemble ainsi ensaché.

La préforme est ensuite dirigée vers un autoclave pour une étape (460) de cuisson. Selon l'exemple de réalisation où la stratification de la préforme est constituée de fibres de carbone dans une résine époxyde, la cuisson est réalisée à une température T1 de l'ordre de 180 °C. Le film de protection constitué de PEEK résiste parfaitement à cette température T1 sans subir de dégradation, c'est à dire sans fusion et sans perte d'étanchéité du film. Selon un mode de réalisation particulier, la cuisson peut être partielle de sorte à conserver une possibilité d'assemblage par co-cuisson.

Les pièces élémentaires étant réalisées et protégées par un film protecteur sur leurs faces exposées au carburant, celles-ci sont assemblées au cours d'une étape d'assemblage (470). Cet assemblage peut être réalisé par collage, rivetage ou co-cuisson selon des procédés connus de l'art antérieur. Au cours d'une étape (480) de parachèvement, l'étanchéité des interstices entre les pièces ainsi assemblées est réalisée par la pose de cordons de mastic d'étanchéité.

La description ci-avant et les exemples de réalisation montrent que l'invention atteint les objectifs visés, en particulier elle permet d'obtenir une structure caisson constituée d'un matériau composite à renfort fibreux, ladite structure caisson comportant un volume vide apte à contenir du carburant, laquelle structure est obtenue de manière économique et reproductible, avec une faible masse ajoutée pour obtenir l'étanchéité dudit volume vide et la protection des matériaux structuraux vis-à-vis du contact avec les hydrocarbures.

## Revendications

1. Procédé pour la fabrication d'une structure en caisson (100) pour un aéronef, ladite structure comportant un volume (150) apte à contenir du carburant, par l'assemblage d'une pluralité de pièces composites à renfort fibreux, **caractérisé en ce qu'**il comprend les étapes consistant à :
i. réaliser une pluralité de pièces élémentaires (110, 121, 122) stratifiées composites à renfort fibreux dans une matrice organique, chaque pièce comprenant une face exposée aux hydrocarbure dans ladite structure caisson (100), et une zone (112, 113) formant interface d'assemblage pour l'assemblage de ladite pièce sans la structure caisson, la réalisation de chaque pièce élémentaire comprenant les étapes consistant à :
a. draper (410) des plis de fibres préimprégnées d'une résine thermodurcissable ayant une première température de cuisson, T1, de sorte à obtenir la stratification correspondant à ladite pièce ;
b. déposer (430) sur la face exposée aux hydrocarbures de la stratification obtenue à l'étape a), et sans couvrir la zone d'assemblage, un pli constitué d'un film mince (130, 131, 132) d'un polymère résistant aux hydrocarbures et à la température de cuisson T1, dit film de protection (130, 131, 132), comprenant les opérations consistant à :
b.i. découper (420) le film de protection au contour visé ;
b.ii. projeter l'emplacement des zones non couvertes par le film de protection ;
b.iii. déposer (430) le film sur la stratification en dehors des zones ainsi délimitées.
c. réaliser la cuisson (460) sous pression à la température T1 de l'ensemble stratifié obtenu à l'étape b).

2. Procédé selon la revendication 1, dans lequel la matrice thermodurcissable des pièces élémentaires est constituée d'une résine thermodurcissable époxyde et le film (130, 131, 132) de protection est constitué d'un polymère de polyétheréthercétone (PEEK) d'une épaisseur comprise entre 0,015 mm et 0,035 mm.

3. Procédé selon la revendication 1, comprenant avant l'étape b) une étape consistant à traiter une face du film de protection pour en améliorer la mouillabilité.

4. Procédé selon la revendication 1, dans lequel film de protection (130, 131, 132, 331, 332) comprend une couche d'un adhésif sensible à la pression, dit PSA, sur l'une de ses faces.

5. Procédé selon la revendication 1, dans lequel le film de protection (130, 131, 132) est déposé à l'étape b) en plusieurs lés (331, 332) avec des recouvrements des bords desdits lés.

6. Procédé selon la revendication 1, **caractérisé en ce qu'**il comprend entre les étapes b) et c) une étape consistant à :
d. compacter (450) la stratification et le film sous sac à vide.

7. Procédé selon la revendication 1, dans lequel l'étape ii) est réalisée par rivetage.

8. Procédé selon la revendication 1, dans lequel l'étape ii) est réalisée par collage.

## Patentansprüche

1. Verfahren zur Herstellung einer Kastenstruktur (100) für ein Flugzeug, wobei diese Struktur ein Volumen (150) beinhaltet, das imstande ist, Kraftstoff aufzunehmen, durch Montage einer Vielzahl von Verbundbauteilen mit Faserverstärkung, **dadurch gekennzeichnet, dass** es die folgenden Schritte umfasst:
i. Realisieren einer Vielzahl von laminierten Einzelverbundbauteilen (110, 121, 122) mit Faserverstärkung in einer organischen Matrix, wobei jedes Bauteil eine Seite umfasst, die dem Kohlenwasserstoff in der Kastenstruktur (100) ausgesetzt ist, und eine Zone (112, 113), die eine Montageschnittstelle zum Montieren dieses Bauteils in der Kastenstruktur bildet, wobei das Realisieren jedes Einzelbauteils die folgenden Schritte umfasst:
a. Drapieren (410) von Faserlagen, die mit einem wärmehärtenden Harz vorimprägniert sind, eine erste Brenntemperatur, T1, aufweisend, um die diesem Bauteil entsprechende Laminierung zu erhalten;
b. Ablegen (430) auf der aus der Laminierung in Schritt a) erhaltenen Seite, die den Kohlenwasserstoffen ausgesetzt ist, und ohne die Montagezone abzudecken, einer Lage bestehend aus einem dünnen Film (130, 131, 132) eines Polymers, das den Kohlenwasserstoffen und der Brenntemperatur T1 widersteht, Schutzfilm (130, 131, 132) genannt, die folgenden Vorgänge umfassend:
b.i. Zuschneiden (420) des Schutzfilms auf die angestrebte Kontur;
b.ii. Projizieren der Stelle der Zonen, die nicht von dem Schutzfilm abgedeckt werden;
b.iii. Ablegen (430) des Films auf der Laminierung außerhalb der so eingegrenzten Zonen;
c. Realisieren des Brennens (460) unter Druck auf der Temperatur T1 der in Schritt b) erhaltenen laminierten Einheit.

2. Verfahren nach Anspruch 1, wobei die wärmehärtende Matrix der Einzelbauteile aus einem wärmehärtenden Epoxidharz besteht und der Schutzfilm (130, 131, 132) aus einem Polymer aus Polyetheretherketon (PEEK) mit einer Dicke besteht, die zwischen 0,015 mm und 0,035 mm enthalten ist.

3. Verfahren nach Anspruch 1, vor dem Schritt b) einen Schritt des Behandelns einer Seite des Schutzfilms umfassend, um dessen Benetzbarkeit zu verbessern.

4. Verfahren nach Anspruch 1, wobei der Schutzfilm (130, 131, 132, 331, 332) eine Schicht aus einem druckempfindlichen Klebstoff, PSA genannt, auf einer seiner Seiten umfasst.

5. Verfahren nach Anspruch 1, wobei der Schutzfilm (130, 131, 132) im Schritt b) in mehreren Bahnen (331, 332) mit Überschneidungen der Ränder der Bahnen abgelegt wird.

6. Verfahren nach Anspruch 1, **dadurch gekennzeichnet, dass** es zwischen den Schritten b) und c) einen Schritt umfasst des:
d. Verdichtens (450) der Laminierung und des Films unter einem Vakuumsack.

7. Verfahren nach Anspruch 1, wobei der Schritt ii) durch Vernieten realisiert wird.

8. Verfahren nach Anspruch 1, wobei der Schritt ii) durch Verkleben realisiert wird.

## Claims

1. Method for manufacturing a caisson structure (100) for an aircraft, said structure comprising a volume (150) able to contain fuel, by the assembly of a plurality of composite parts with fibre reinforcement, **characterised in that** it comprises the steps of:
i. producing a plurality of composite stratified elementary parts (110, 121, 122) with fibre reinforcement in an organic matrix, each part comprising a face exposed to the hydrocarbons in said caisson structure (100), and a zone (112, 113) forming an assembly interface for the assembly of said part without the caisson structure, the production of each elementary part comprising the steps of:
a. draping (410) plies of fibres preimpregnated with a thermosetting resin having a first baking temperature, T1, in such a way as to obtain the stratification corresponding to said part;
b. depositing (430) on the face exposed to the hydrocarbons of the stratification obtained in the step a), and without covering the assembly zone, a ply comprised of a thin film (130, 131, 132) of a polymer that is resistant to hydrocarbons and to the baking temperature T1, referred to as protective film (130, 131, 132), comprising the operations of:
b.i. cutting (420) the protective film to the desired contour;
b.ii. spraying the location of the zones not covered by the protective film;
b.iii. depositing (430) the film on the stratification outside of the zones thus delimited,
c. carrying out the baking (460) under pressure at the temperature T1 of the stratified assembly obtained in the step b).

2. Method according to claim 1, wherein the thermosetting matrix of the elementary parts is comprised of an epoxide thermosetting resin and the protective film (130, 131, 132) is comprised of a polyether ether ketone polymer (PEEK) with a thickness between 0.015 mm and 0.035 mm.

3. Method according to claim 1, comprising before the step b) a step of treating a face of the protective film in order to improve the wettability thereof.

4. Method according to claim 1, wherein the protective film (130, 131, 132, 331, 332) comprises a layer of pressure-sensitive adhesive, called PSA, on one of its faces.

5. Method according to claim 1, wherein the protective film (130, 131, 132) is deposited in the step b) in several layers (331, 332) with coverings of the edges of said layers.

6. Method according to claim 1, **characterised in that** it comprises between the steps b) and c) a step of:
d. compacting (450) the stratification and the film in a vacuum bag.

7. Method according to claim 1, wherein the step ii) is carried out via riveting.

8. Method according to claim 1, wherein the step ii) is carried out by gluing.
